# EUROPÄISCHE PATENTANMELDUNG

(11) **EP 3 917 089 A1**
(43) Veröffentlichungstag der Anmeldung: **01.12.2021**
(21) Anmeldenummer: 20177065.8
(22) Anmeldetag: 28.05.2020
(51) Int. Cl.: H04L 12/46

(54) **VERFAHREN ZUM BETRIEB EINES KOMMUNIKATIONSSYSTEMS ZUR ÜBERMITTLUNG ZEITKRITISCHER DATEN UND SWITCH**

(71) Anmelder: Siemens Aktiengesellschaft, 80333 München (DE)
(72) Erfinder: Neumann, Markus, 76189 Karlsruhe (DE)

(57) **Zusammenfassung**

Zur Übermittlung zeitkritischer Daten werden Datagramme (400) von einem ersten Kommunikationsgerät (201) in einem ersten Teilnetz (101) und zu einem zweiten Kommunikationsgerät (202) in einem zweiten Teilnetz (102) über ein drittes Teilnetz (103) gesendet. Dabei sind das erste und das dritte Teilnetz über einen ersten Switch (301) und das zweite und das dritte Teilnetz über einen zweiten Switch (302) verbunden. Die Datagramme werden anhand einer Kennung eines ersten virtuellen lokalen Netzes und einer Prioritätsangabe vom ersten Kommunikationsgerät zum ersten Switch weitergeleitet. Der erste Switch kapselt die durch das erste Kommunikationsgerät gesendeten Datagramme jeweils in Datenrahmen (500) ein, die einem Datenstrom durch das dritte Teilnetz zugeordnet sind, und fügt in die Datenrahmen eine Kennung (502) eines zweiten virtuellen lokalen Netzes ein. Anhand der Kennung des zweiten virtuellen lokalen Netzes werden im dritten Teilnetz Ressourcen entlang eines ausgewählten Pfades reserviert. Der zweite Switch entnimmt die Datagramme, die in die dem Datenstrom zugeordneten Datenrahmen eingekapselt sind, aus empfangenen Datenrahmen und leitet die entnommenen Datagramme anhand der Kennung des ersten virtuellen lokalen Netzes und der Prioritätsangabe zum zweiten Kommunikationsgerät weiter.

## Beschreibung

Die vorliegende Erfindung betrifft ein Verfahren zum Betrieb eines Kommunikationssystems zur Übermittlung zeitkritischer Daten, insbesondere Steuerungsdaten in einem industriellen Automatisierungssystem, sowie einen Switch zur Durchführung eines solchen Verfahrens.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (Audio/ Video Bridging) über Kommunikationsnetze ist eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Für die gesicherte Übertragung von Audio- und Videodatenströmen über Ethernet-basierte Kommunikationsnetze sind entsprechend Standard IEEE 802.1 Qav sind Credit-based Shaper (CBS) als Maß für eine Bandbreitenüberwachung definiert worden. Durch Credit-based Shaper wird nach jedem übertragenen Datenrahmen eine Übertragungspause definiert, um eine Bandbreitenbegrenzung in Bezug auf eine reservierte Bandbreite sicherzustellen. Derartige Zwangspausen sind jedoch in industriellen Automatisierungssystemen bei einer Übertragung von vielen Datenrahmen mit geringem Nutzdateninhalt für Steuerungsdaten, die eher als Datenbündel bzw. Bursts anzusehen sind, äußerst problematisch.

In WO 2019/001718 A1 ist ein Verfahren zur Datenübermittlung beschrieben, das eine Kombination von geschützter Kommunikation und geringem Netzwerk-Konfigurationsaufwand ermöglicht. Dabei werden bei einer Reservierung von Ressourcen zur Übermittlung von Datenströmen (Streams) von einem Sender zu einem Empfänger zumindest zwei zumindest abschnittsweise redundante Pfade reserviert. Durch Erweiterung eines Reservierungsprotokolls wird eine automatische Konfiguration von Duplikatefiltern an redundanten Pfadabschnitten zugeordneten Netzknoten während einer Ressourcenreservierung vorgenommen.

Aus der älteren europäischen Patentanmeldung mit dem Anmeldeaktenzeichen 20170149.7 ist ein Verfahren zur Übermittlung zeitkritischer Daten bekannt, bei dem ausgewählte Datagramme Datenströmen zugeordnet und zwischen ersten Kommunikationsgeräten und zweiten Kommunikationsgeräten über zumindest die ersten und zweiten Kommunikationsgeräte umfassende Pfade übermittelt werden. Reservierungsanfragen zur Bereitstellung von Ressourcen für eine Übertragung der Datenströme jeweils an eine Domänen-Steuerungseinrichtung übermittelt. Die Domänen-Steuerungseinrichtungen überprüfen bei Reservierungsanfragen jeweils, ob das jeweilige erste und zweite Kommunikationsgerät von derselben Domäne umfasst sind. Domänen-übergreifende Reservierungsanfragen werden jeweils an eine übergeordnete Kommunikationssteuerungseinrichtung weitergeleitet. Die übergeordnete Kommunikationssteuerungseinrichtung ermittelt von den Reservierungsanfragen jeweils betroffene Domänen und übermittelt auf jeweilige Abschnitte der Pfade beschränkte Teil-Reservierungsanfragen an die Domänen-Steuerungseinrichtungen der ermittelten Domänen.

Bei einer Datenübermittlung zwischen zwei Zellen eines industriellen Automatisierungssystems über ein Transitnetz, das die beiden Zellen miteinander verbindet, können bei einem Übergang übermittelter Datagramme von einer Start-Zelle in das Transitnetz wesentliche Priorisierungsinformationen und Informationen über Zuordnungen zu logischen Netzen verloren gehen. Übermittelte Datagramme können somit nach einem Übergang vom Transitnetz in eine Ziel-Zelle nicht mehr mit korrekten Priorisierungsinformationen oder zutreffenden Zuordnungen zu logischen Netzen weitergeleitet werden. Letztlich kann dies einen Datenverlust zur Folge haben. Darüber hinaus ist zwischen Zellen eines industriellen Automatisierungssystems üblicherweise zeitkritisch. Daher sollte das Transitnetz zumindest in Bezug auf zwischen zwei Zellen ausgetauschtem Datenverkehr deterministische Eigenschaften aufweisen.

Der vorliegenden Erfindung liegt die Aufgabe zugrunde, ein Verfahren zum Betrieb eines Kommunikationssystems zur Übermittlung zeitkritischer Daten schaffen, das sowohl eine effiziente Ausschöpfung zur Verfügung stehender Systemressourcen als auch eine flexible und schnelle Anpassung an veränderte betriebliche Rahmenbedingungen ermöglicht, und eine geeignete Implementierung zur Durchführung des Verfahrens anzugeben.

Der vorliegenden Erfindung liegt daher die Aufgabe zugrunde, ein Verfahren zum Betrieb eines Kommunikationssystems zur Übermittlung zeitkritischer Daten zwischen zwei Teilnetzen, die eine logische Einheit bilden, über ein drittes Teilnetz zu schaffen, das transparente Übermittlung der Daten durch das dritte Teilnetz mit geringen Latenzen und unter Erhaltung ursprünglicher Priorisierungen ermöglicht, und geeignete Mittel zur Durchführung des Verfahrens anzugeben.

Diese Aufgabe wird erfindungsgemäß durch ein Verfahren mit den in Anspruch 1 angegebenen Merkmalen und durch einen Switch mit den in Anspruch 12 angegebenen Merkmalen gelöst.

Vorteilhafte Weiterbildungen sind in den abhängigen Ansprüchen angegeben.

Entsprechend dem erfindungsgemäßen Verfahren zum Betrieb eines Kommunikationssystems zur Übermittlung zeitkritischer Daten werden Datagramme von einem ersten Kommunikationsgerät in einem ersten Teilnetz und zu einem zweiten Kommunikationsgerät in einem zweiten Teilnetz über ein drittes Teilnetz gesendet. Dabei sind das erste und das dritte Teilnetz über einen ersten Switch verbunden, während das zweite und das dritte Teilnetz über einen zweiten Switch verbunden sind. Das erste Kommunikationsgerät fügt in die Datagramme eine Kennung eines ersten virtuellen lokalen Netzes sowie eine Prioritätsangabe ein. Anhand der Kennung des ersten virtuellen lokalen Netzes und der Prioritätsangabe werden die Datagramme vom ersten Kommunikationsgerät zum ersten Switch weitergeleitet. Das erste und das zweite Teilnetz können beispielsweise PROFINET-Zellen zugeordnet sein, während das dritte Teilnetz vorzugsweise ein TSN-basiertes Transitnetz ist, wobei die Datagramme PROFINET Frames sind.

Erfindungsgemäß kapselt der erste Switch die durch das erste Kommunikationsgerät gesendeten Datagramme jeweils in Datenrahmen, die einem Datenstrom durch das dritte Teilnetz zugeordnet sind, ein und fügt in die Datenrahmen eine Kennung eines zweiten virtuellen lokalen Netzes ein. Zur Übermittlung des Datenstroms im dritten Teilnetz werden anhand der Kennung des zweiten virtuellen lokalen Netzes Ressourcen entlang eines ausgewählten Pfades zwischen dem ersten Switch und dem zweiten Switch reserviert. Der zweite Switch entnimmt die Datagramme, die in die dem Datenstrom zugeordneten Datenrahmen eingekapselt sind, aus empfangenen Datenrahmen und leitet die entnommenen Datagramme anhand der Kennung des ersten virtuellen lokalen Netzes und der Prioritätsangabe zum zweiten Kommunikationsgerät weiter. Auf diese Weise wird eine transparente Übermittlung priorisierter Datengramme zwischen dem ersten und dem zweiten Teilnetz über das dritte Teilnetz erreicht. Insbesondere aufgrund der Reservierung von Ressourcen für den Datenstrom durch das dritte Teilnetz können geringe Latenzen bei der Übermittlung gewährleistet werden.

Der erste bzw. der zweite Switch kapseln bzw. kapselt die Datagramme beispielweise jeweils durch Einfügen in einen Nutzdatenbereich der Datenrahmen ein. Dabei umfasst der Nutzdatenbereich die Kennung des ersten virtuellen lokalen Netzes und die Prioritätsangabe. Entsprechend einer besonders bevorzugten Ausgestaltung der vorliegenden Erfindung sind die Datenrahmen, in welche die Datagramme jeweils eingekapselt werden, VXLAN Frames oder Frames zur Layer 2 Tunnelung der Datagramme. Dies ermöglicht eine besonders zuverlässige und effiziente Implementierung der vorliegenden Erfindung. Vorteilhafterweise ordnen bzw. ordnet der erste bzw. der zweite Switch durch das dritte Teilnetz zu sendenden Datenrahmen, die Datagramme einkapseln, die Kennung des zweiten virtuellen lokalen Netzes Ingress Port-basiert zu. Damit kann eine klar definierte Behandlung der Datagramme bei ihrer Durchleitung durch das dritte Teilnetz sichergestellt werden.

Vorzugsweise spezifizieren bzw. spezifiziert der erste bzw. der zweite Switch in einer Reservierungsanfrage zur Reservierung der Ressourcen für den Datenstrom entlang des ausgewählten Pfades Dienstgüteparameter. In diesem Fall überprüft jedes entlang des ausgewählten Pfades Datenrahmen weiterleitende Kommunikationsgerät oder eine Kommunikationssteuerungseinrichtung anhand der Dienstgüteparameter bei einer Reservierungsanfrage, ob im jeweiligen Kommunikationsgerät ausreichende Ressourcen zur Datenübermittlung unter Einhaltung der spezifizierten Dienstgüteparameter verfügbar sind. Bei ausreichenden Ressourcen ermitteln die Kommunikationsgeräte entlang des ausgewählten Pfades bzw. ermittelt die Kommunikationssteuerungseinrichtung für den Datenstrom jeweils Konfigurationsinformationen. Abschließend werden die Kommunikationsgeräte entlang des ausgewählten Pfades entsprechend den ermittelten Konfigurationsinformationen zur Ressourcen-Bereitstellung für den Datenstrom eingerichtet.

Die durch die Kommunikationsgeräte entlang des ausgewählten Pfades bereitzustellenden Ressourcen umfassen insbesondere nutzbare Übertragungszeitfenster, Bandbreite, zugesicherte maximale Latenz, Queue-Anzahl, Queue-Cache bzw. Adress-Cache in Switches oder Bridges. Vorzugsweise ist das dritte Teilnetz ein Time-sensitive Network, insbesondere entsprechend IEEE802.3-2018, IEEE 802.1Q-2018, IEEE 802.1AB-2016, IEEE 802.1AS-2011, IEEE 802.1BA-2011 bzw. IEEE 802.1CB-2017. Dabei kann eine Weiterleitung von Datenrahmen innerhalb des dritten Teilnetzes beispielsweise mittels Frame Preemption, Time-Aware Shaper, Credit-based Shaper, Burst Limiting Shaper, Peristaltic Shaper bzw. Priority-based gesteuert werden, insbesondere gemäß IEEE 802.1Q-2018. Entsprechend einer besonders bevorzugten Ausführungsform der vorliegenden Erfindung wird der Datenstrom auf eine Reservierungsanfrage bidirektional eingerichtet.

Entsprechend einer besonders bevorzugten Ausgestaltung der vorliegenden Erfindung fügt auch das zweite Kommunikationsgerät in an das erste Kommunikationsgerät zu sendende Datagramme die Kennung des ersten virtuellen lokalen Netzes sowie die Prioritätsangabe ein. In diesem Fall werden die an das erste Kommunikationsgerät zu sendenden Datagramme anhand der Kennung des ersten virtuellen lokalen Netzes und der Prioritätsangabe vom zweiten Kommunikationsgerät zum zweiten Switch weitergeleitet. Außerdem kapselt der zweite Switch die durch das zweite Kommunikationsgerät gesendeten Datagramme jeweils in Datenrahmen, die dem Datenstrom durch das dritte Teilnetz zugeordnet sind, ein und fügt in die Datenrahmen die Kennung des zweiten virtuellen lokalen Netzes ein. Darüber hinaus entnimmt der erste Switch die Datagramme, die in die dem Datenstrom zugeordneten Datenrahmen eingekapselt sind, aus empfangenen Datenrahmen und leitet die entnommenen Datagramme anhand der Kennung des ersten virtuellen lokalen Netzes und der Prioritätsangabe zum ersten Kommunikationsgerät weiter.

Der erfindungsgemäße Switch ist zur Durchführung eines Verfahrens entsprechend vorangehenden Ausführungen vorgesehen und umfasst mehrere Ports zur Verbindung mit Datagramme weiterleitenden Kommunikationsgeräten bzw. Kommunikationsendgeräten. Der Switch ist dafür ausgestaltet und eingerichtet, Datagramme von einem ersten Kommunikationsgerät in einem ersten Teilnetz und zu einem zweiten Kommunikationsgerät in einem zweiten Teilnetz über ein drittes Teilnetz zu senden. Dabei ist in durch das erste Kommunikationsgerät gesendete Datagramme eine Kennung eines ersten virtuellen lokalen Netzes sowie eine Prioritätsangabe eingefügt.

Darüber hinaus ist der Switch erfindungsgemäß dafür ausgestaltet und eingerichtet, die durch das erste Kommunikationsgerät gesendeten Datagramme jeweils in Datenrahmen, die einem Datenstrom durch das dritte Teilnetz zugeordnet sind, einzukapseln und in die Datenrahmen eine Kennung eines zweiten virtuellen lokalen Netzes einzufügen. Außerdem ist der Switch dafür ausgestaltet und eingerichtet ist, die Datagramme, die in die dem Datenstrom zugeordneten Datenrahmen eingekapselt sind, aus empfangenen Datenrahmen zu entnehmen und die entnommenen Datagramme anhand der Kennung des ersten virtuellen lokalen Netzes und der Prioritätsangabe zum zweiten Kommunikationsgerät weiterzuleiten.

Die vorliegende Erfindung wird nachfolgend an einem Ausführungsbeispiel anhand der Zeichnung näher erläutert. Es zeigt
- Figur 1: ein mehrere Kommunikationsgeräte umfassendes Kommunikationssystem für ein industrielles Automatisierungssystem,
- Figur 2: eine schematische Darstellung eines innerhalb des Kommunikationssystems gemäß Figur 1 von einem ersten an ein zweites Kommunikationsgerät gesendeten Datagramms,
- Figur 3: eine schematische Darstellung eines Datenrahmens, in den das Datagramm gemäß Figur 2 eingekapselt wird.

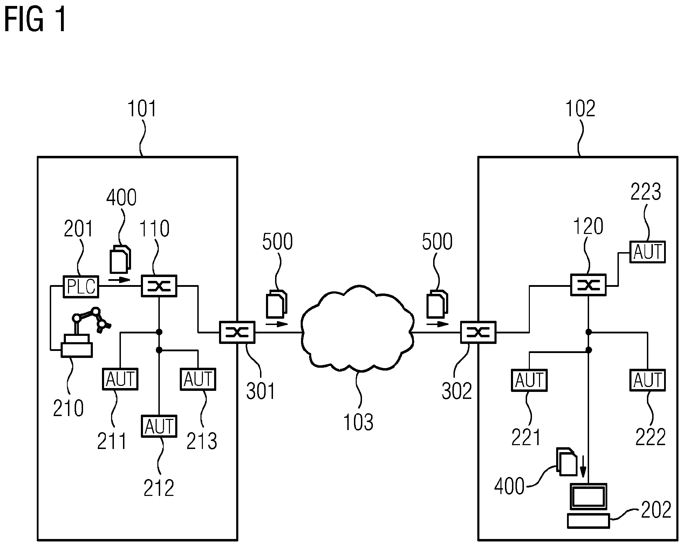

Das in Figur 1 dargestellte Kommunikationssystem für ein industrielles Automatisierungssystem ist in drei Teilnetze 101-103 gegliedert, die wiederum jeweils mehrere Bridges bzw. Switches 110, 120, 301, 302 als Datagramme weiterleitende Kommunikationsgeräte sowie mehrere an die Switches 110, 120 angeschlossene Kommunikations- bzw. Kommunikationsendgeräte 201-202, 211-213, 221-223 umfassen. Im Kommunikationssystem werden insbesondere Datagramme 400 von einem ersten Kommunikationsgerät 201 in einem ersten Teilnetz 101 und zu einem zweiten Kommunikationsgerät 202 in einem zweiten Teilnetz 102 über ein drittes Teilnetz 103 gesendet. Dabei sind das erste 101 und das dritte Teilnetz 103 über einen ersten Switch 301 verbunden, während zweite 102 und das dritte Teilnetz 103 über einen zweiten Switch 302 verbunden sind.

Im vorliegenden Ausführungsbeispiel ist das erste Kommunikationsgerät 201 eine speicherprogrammierbare Steuerung, während das zweite Kommunikationsgerät 202 eine Bedien- und Beobachtungsstation ist. Darüber hinaus sind die Datagramme 400 PROFINET Frames, wobei das erste 101 und das zweite Teilnetz 102 jeweils einer PROFINET-Zelle zugeordnet sind. Das dritte Teilnetz 103 stellt für die PROFINET-Zellen ein Transnetz dar, das vorzugsweise als Time-Sensitive Network ausgestaltet ist, insbesondere entsprechend IEEE802.3-2018, IEEE 802.1Q-2018, IEEE 802.1AB-2016, IEEE 802.1AS-2011, IEEE 802.1BA-2011 bzw. IEEE 802.1CB-2017. Eine Weiterleitung von Datenrahmen (Frames) innerhalb des dritten Teilnetzes 103 kann beispielsweise mittels Frame Preemption gemäß IEEE 802.1Q-2018, Time-Aware Shaper gemäß IEEE 802.1Q-2018, Credit-Based Shaper gemäß IEEE 802.1Q-2018, Burst Limiting Shaper, Peristaltic Shaper bzw. Priority-Based Shaper gesteuert werden.

Die Bridges bzw. Switches 110, 120, 301, 302 umfassen jeweils mehrere Ports sowie einen Backplane-Switch als Koppelelement und dienen insbesondere zum Anschluss von speicherprogrammierbaren Steuerungen 201, Bedien- und Beobachtungsstationen 202, I/O-Controllern oder I/O-Modulen, die ebenfalls Kommunikationsgeräte bzw. Kommunikationsendgeräte darstellen.

Speicherprogrammierbare Steuerungen 201 umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über das Kommunikationsmodul kann eine speicherprogrammierbare Steuerung 201 mit einem Switch oder Router oder zusätzlich mit einem Feldbus verbunden werden. Die Eingabe/Ausgabe-Einheit dient einem Austausch von Steuerungs- und Messgrößen zwischen der speicherprogrammierbaren Steuerung 201 und einer durch die speicherprogrammierbare Steuerung 201 gesteuerten Maschine oder Vorrichtung 210. Die Zentraleinheit ist insbesondere für eine Ermittlung geeigneter Steuerungsgrößen aus erfassten Messgrößen vorgesehen. Obige Komponenten der speicherprogrammierbaren Steuerung 201 sind beispielsweise über ein Rückwandbus-System miteinander verbunden.

Zum Austausch von Steuerungs- und Messgrößen mit angeschlossenen Maschinen oder Vorrichtungen können grundsätzlich auch I/O-Module vorgesehen sein. Eine Steuerung von I/O-Modulen kann insbesondere mittels eines I/O-Controllers pro Automatisierungszelle erfolgen. Alternativ hierzu können I/O-Module auch durch eine entfernte speicherprogrammierbare Steuerung angesteuert werden.

Eine Bedien- und Beobachtungsstation 202 dient zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation 202 zur Anzeige von Werten eines Regelungskreises und zur Veränderung von Regelungsparametern verwendet. Bedien- und Beobachtungsstationen 202 umfassen zumindest eine graphische Benutzerschnittstelle, ein Eingabegerät, eine Prozessoreinheit und ein Kommunikationsmodul.

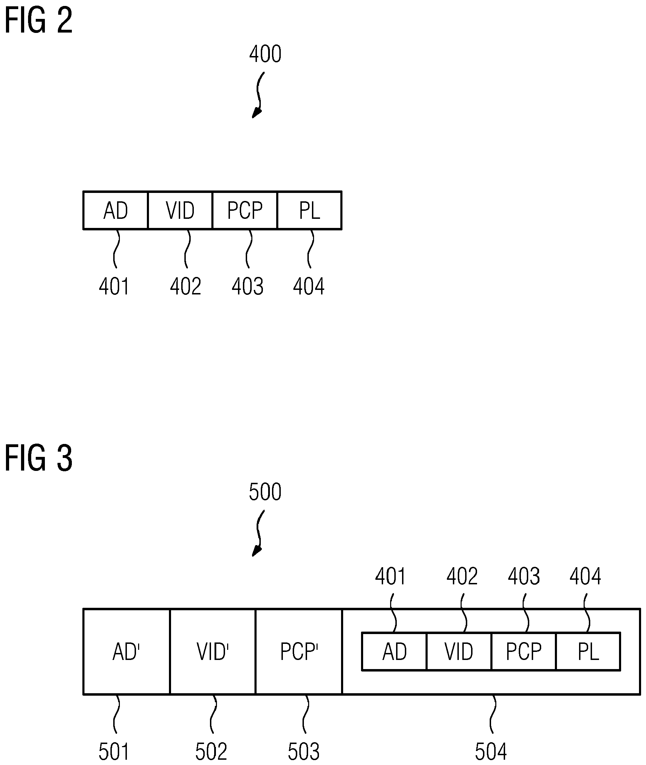

Die speicherprogrammierbare Steuerung 201 fügt als erstes Kommunikationsgerät in die Datagramme 400, die in Figur 2 schematisch dargestellt sind, eine Kennung 402 eines ersten VLAN, beispielsweise VID=0, sowie eine Prioritätsangabe 403, beispielsweise PCP=6, ein. Auf diese Weise werden in den PROFINET-Zellen, die das erste 101 bzw. zweite Teilnetz 102 umfassen, hochpriorisierte Steuerungsdaten gekennzeichnet, die in den PROFINET-Zellen zyklisch innerhalb vorgegebener bzw. reservierter Zeitfenster übermittelt werden. Hierzu werden im vorliegenden Ausführungsbeispiel sämtliche Kommunikationsgeräte 110, 120, 201-202, 211-213, 221-223, 301-302 in den PROFINET-Zellen taktsynchron betrieben. Anhand der Kennung 402 des ersten VLAN und der Prioritätsangabe 403 werden die Datagramme der speicherprogrammierbare Steuerung 201 innerhalb des ersten Teilnetzes 101 um ersten Switch 301 weitergeleitet. Entsprechend Figur 2 umfassen die Datagramme 400 einen Adressbereich 401 und einen Nutzdatenbereich 404 und entsprechen im vorliegenden Ausführungsbeispiel hinsichtlich ihrer Struktur grundsätzlich Ethernet-Frames.

Sowohl der erste 301 als auch der zweite Switch 302 ordnen aus dem ersten 101 bzw. zweiten Teilnetz 102 empfangenen Datagrammen 400, die durch das dritte Teilnetz 103 durchzuleiten sind, Ingress Port-basiert die Kennung eines zweiten VLAN zu. Um einen Verlust bzw. ein Überschreiben der in die Datagramme 400 eingefügten Kennung 402 des ersten VLAN und der Prioritätsangabe 403 beim Durchleiten durch das dritte Teilnetz 103 zu vermeiden, kapselt der erste Switch 301 die durch die speicherprogrammierbare Steuerung 201 gesendeten Datagramme 400 jeweils in Datenrahmen 500, die einem TSN-Datenstrom durch das dritte Teilnetz 103 zugeordnet und in Figur 3 schematisch dargestellt sind, und fügt in die Datenrahmen 500 die Kennung 502 eines zweiten VLAN, beispielsweise VID'=1, sowie eine Prioritätsangabe 503, beispielsweise PCP'=6, für eine Durchleitung durch das dritte Teilnetz 103 ein.

In analoger Weise fügt auch die Bedien- und Beobachtungsstation 202 als zweites Kommunikationsgerät in an die speicherprogrammierbare Steuerung 201 zu sendende Datagramme 400 die Kennung 402 des ersten VLAN sowie die Prioritätsangabe 403 ein. Dementsprechend werden die an die speicherprogrammierbare Steuerung 201 zu sendenden Datagramme 400 anhand der Kennung 402 des ersten VLAN und der Prioritätsangabe 403 von der die Bedien- und Beobachtungsstation 202 zum zweiten Switch 302 weitergeleitet. Darüber hinaus kapselt der zweite Switch 302 die durch die Bedien- und Beobachtungsstation 202 gesendeten Datagramme 400 jeweils in Datenrahmen 500 ein, die dem TSN-Datenstrom durch das dritte Teilnetz 103 zugeordnet sind, und fügt in die Datenrahmen 500 die Kennung 502 des zweiten VLAN ein.

Der erste 301 bzw. der zweite Switch 302 kapseln die Datagramme 400 jeweils durch Einfügen in einen Nutzdatenbereich 504 der Datenrahmen 500 ein. Dabei umfasst der Nutzdatenbereich 504 der Datenrahmen 500 insbesondere die Kennung 402 des ersten VLAN und die Prioritätsangabe 403 für eine Weiterleitung innerhalb des ersten bzw. zweiten Teilnetzes. Entsprechend Figur 3 umfassen die Datenrahmen 500 außerdem einen Adressbereich 501 und entsprechen hinsichtlich ihrer Struktur Ethernet-Frames. Vorzugsweise sind Datenrahmen 500, in welche die Datagramme 400 jeweils eingekapselt werden, VXLAN Frames oder Frames zur Layer 2 Tunnelung der Datagramme 400.

Zur Übermittlung des TSN-Datenstroms werden im dritten Teilnetz 103 anhand der Kennung 502 des zweiten VLAN Ressourcen entlang eines ausgewählten Pfades zwischen dem ersten Switch 301 und dem zweiten Switch 302 reserviert. Der erste 301 bzw. der zweite Switch 302 spezifizieren zur Reservierung der Ressourcen für den TSN-Datenstrom entlang des ausgewählten Pfades Dienstgüteparameter in einer Reservierungsanfrage.

Entsprechend einem dezentralen Stream-Reservierungskonzept überprüft jedes entlang des ausgewählten Pfades Datenrahmen weiterleitende Kommunikationsgerät bei einer Reservierungsanfrage anhand der Dienstgüteparameter, ob im jeweiligen Kommunikationsgerät ausreichende Ressourcen zur Datenübermittlung unter Einhaltung der spezifizierten Dienstgüteparameter verfügbar sind. Bei einem zentralen Stream-Reservierungskonzept erfolgt eine solche Überprüfung durch einen Central Network Controller oder eine Network Management Engine als übergeordnete Kommunikationssteuerungseinrichtung. Stehen ausreichende Ressourcen zur Verfügung, ermitteln die Kommunikationsgeräte entlang des ausgewählten Pfades beim dezentralen Stream-Reservierungskonzept jeweils Konfigurationsinformationen. Entsprechend diesen ermittelten Konfigurationsinformationen werden die Kommunikationsgeräte entlang des ausgewählten Pfades zur Ressourcen-Bereitstellung für den TSN-Datenstrom eingerichtet. Entsprechend dem zentralen Stream-Reservierungskonzept werden die Konfigurationsinformationen den Central Network Controller oder die Network Management Engine ermittelt.

Die durch die Kommunikationsgeräte entlang des ausgewählten Pfades im dritten Teilnetz 103 bereitzustellenden Ressourcen umfassen insbesondere nutzbare Übertragungszeitfenster, Bandbreite, zugesicherte maximale Latenz, Queue-Anzahl, Queue-Cache bzw. Adress-Cache in Switches oder Bridges umfassen. Vorzugsweise wird der TSN-Datenstrom durch das dritte Teilnetz 103 auf eine Reservierungsanfrage bidirektional eingerichtet.

Der zweite Switch 302 entnimmt die Datagramme 400, die in die dem TSN-Datenstrom zugeordneten Datenrahmen 500 eingekapselt sind, aus über das dritte Teilnetz 103 empfangenen Datenrahmen und leitet die entnommenen Datagramme anhand der Kennung 402 des ersten VLAN und der Prioritätsangabe 403 zur Bedien- und Beobachtungsstation 202 weiter. In entsprechender Weise entnimmt der erste Switch 301 die Datagramme 400, die in die dem TSN-Datenstrom zugeordneten Datenrahmen 500 eingekapselt sind, aus über das dritte Teilnetz 103 empfangenen Datenrahmen und leitet die entnommenen Datagramme anhand der Kennung 402 des ersten VLAN und der Prioritätsangabe 403 zur speicherprogrammierbaren Steuerung 201 weiter.

Mit dem vorliegende Ausführungsbeispiel ist eine Segmentierung von Kommunikationsnetzen, insbesondere von PROFINET- bzw. GOOSE-Netzen, ohne Verlust von Priorisierungsinformationen möglich, und zwar zeitsynchron. Eine Verbindung von PROFINET-Zellen über ein Transitnetz ist vollkommen transparent für PROFINET-Datenverkehr. Insbesondere ist eine gemischte Datenübermittlung von PROFINET-Datenverkehr und Nicht-PROFINET-Datenverkehr im zeitsynchronen Transitnetz ohne Gefahr einer Überlast im Transitnetz möglich. Grundsätzlich ist mit vorliegendem Konzept eine Layer 2 Kommunikation über Layer 3 Kommunikationsnetze möglich, wodurch eine Grundlage für eine weitergehende Flexibilisierung eines Netzbetriebs geschaffen ist.

## Patentansprüche

1. Verfahren zum Betrieb eines Kommunikationssystems zur Übermittlung zeitkritischer Daten, bei dem
- Datagramme (400) von einem ersten Kommunikationsgerät (201) in einem ersten Teilnetz (101) und zu einem zweiten Kommunikationsgerät (202) in einem zweiten Teilnetz (102) über ein drittes Teilnetz (103) gesendet werden, wobei das erste und das dritte Teilnetz über einen ersten Switch (301) und das zweite und das dritte Teilnetz über einen zweiten Switch (302) verbunden sind,
- das erste Kommunikationsgerät in die Datagramme eine Kennung (402) eines ersten virtuellen lokalen Netzes sowie eine Prioritätsangabe (403) einfügt,
- die Datagramme anhand der Kennung des ersten virtuellen lokalen Netzes und der Prioritätsangabe vom ersten Kommunikationsgerät zum ersten Switch weitergeleitet werden,
- der erste Switch die durch das erste Kommunikationsgerät gesendeten Datagramme jeweils in Datenrahmen (500), die einem Datenstrom durch das dritte Teilnetz zugeordnet sind, einkapselt und in die Datenrahmen eine Kennung (502) eines zweiten virtuellen lokalen Netzes einfügt,
- zur Übermittlung des Datenstroms im dritten Teilnetz anhand der Kennung des zweiten virtuellen lokalen Netzes Ressourcen entlang eines ausgewählten Pfades zwischen dem ersten Switch und dem zweiten Switch reserviert werden,
- der zweite Switch die Datagramme, die in die dem Datenstrom zugeordneten Datenrahmen eingekapselt sind, aus empfangenen Datenrahmen entnimmt und die entnommenen Datagramme anhand der Kennung des ersten virtuellen lokalen Netzes und der Prioritätsangabe zum zweiten Kommunikationsgerät weiterleitet.

2. Verfahren nach Anspruch 1,
bei dem der erste und/oder der zweite Switch zur Reservierung der Ressourcen für den Datenstrom entlang des ausgewählten Pfades Dienstgüteparameter in einer Reservierungsanfrage spezifizieren/spezifiziert, bei dem jedes entlang des ausgewählten Pfades Datenrahmen weiterleitende Kommunikationsgerät oder eine Kommunikationssteuerungseinrichtung anhand der Dienstgüteparameter bei einer Reservierungsanfrage überprüft, ob im jeweiligen Kommunikationsgerät ausreichende Ressourcen zur Datenübermittlung unter Einhaltung der spezifizierten Dienstgüteparameter verfügbar sind, bei dem die Kommunikationsgeräte entlang des ausgewählten Pfades oder die Kommunikationssteuerungseinrichtung für den Datenstrom bei ausreichenden Ressourcen jeweils Konfigurationsinformationen ermitteln/ermittelt und bei dem die Kommunikationsgeräte entlang des ausgewählten Pfades entsprechend den ermittelten Konfigurationsinformationen zur Ressourcen-Bereitstellung für den Datenstrom eingerichtet werden.

3. Verfahren nach Anspruch 2,
bei dem die durch die Kommunikationsgeräte entlang des ausgewählten Pfades bereitzustellenden Ressourcen nutzbare Übertragungszeitfenster, Bandbreite, zugesicherte maximale Latenz, Queue-Anzahl, Queue-Cache und/oder Adress-Cache in Switches oder Bridges umfassen.

4. Verfahren nach einem der Ansprüche 2 oder 3,
bei dem das dritte Teilnetz ein Time-sensitive Network, insbesondere entsprechend IEEE802.3-2018, IEEE 802.1Q-2018, IEEE 802.1AB-2016, IEEE 802.1AS-2011, IEEE 802.1BA-2011 und/oder IEEE 802.1CB-2017, ist.

5. Verfahren nach Anspruch 4,
bei dem eine Weiterleitung von Datenrahmen innerhalb des dritten Teilnetzes mittels Frame Preemption, Time-Aware Shaper, Credit-based Shaper, Burst Limiting Shaper, Peristaltic Shaper und/oder Priority-based gesteuert wird, insbesondere gemäß IEEE 802.1Q-2018.

6. Verfahren nach einem der Ansprüche 2 bis 5,
bei dem der Datenstrom auf eine Reservierungsanfrage bidirektional eingerichtet wird.

7. Verfahren nach einem der Ansprüche 1 bis 6,
bei dem das zweite Kommunikationsgerät in an das erste Kommunikationsgerät zu sendende Datagramme die Kennung des ersten virtuellen lokalen Netzes sowie die Prioritätsangabe einfügt, bei dem die an das erste Kommunikationsgerät zu sendenden Datagramme anhand der Kennung des ersten virtuellen lokalen Netzes und der Prioritätsangabe vom zweiten Kommunikationsgerät zum zweiten Switch weitergeleitet werden, bei dem der zweite Switch die durch das zweite Kommunikationsgerät gesendeten Datagramme jeweils in Datenrahmen, die dem Datenstrom durch das dritte Teilnetz zugeordnet sind, einkapselt und in die Datenrahmen die Kennung des zweiten virtuellen lokalen Netzes einfügt und bei dem der erste Switch die Datagramme, die in die dem Datenstrom zugeordneten Datenrahmen eingekapselt sind, aus empfangenen Datenrahmen entnimmt und die entnommenen Datagramme anhand der Kennung des ersten virtuellen lokalen Netzes und der Prioritätsangabe zum ersten Kommunikationsgerät weiterleitet.

8. Verfahren nach einem der Ansprüche 1 bis 7,
bei dem der erste und/oder der zweite Switch die Datagramme jeweils durch Einfügen in einen Nutzdatenbereich der Datenrahmen einkapseln/einkapselt, wobei der Nutzdatenbereich die Kennung des ersten virtuellen lokalen Netzes und die Prioritätsangabe umfasst.

9. Verfahren nach einem der Ansprüche 1 bis 8,
bei dem die Datenrahmen, in welche die Datagramme jeweils eingekapselt werden, VXLAN Frames oder Frames zur Layer 2 Tunnelung der Datagramme sind.

10. Verfahren nach einem der Ansprüche 1 bis 9,
bei dem das erste und das zweite Teilnetz PROFINET-Zellen zugeordnet sind, bei dem das dritte Teilnetz ein TSN-basiertes Transitnetz ist und bei dem die Datagramme PROFINET Frames sind.

11. Verfahren nach einem der Ansprüche 1 bis 10,
bei dem der erste und/oder der zweite Switch durch das dritte Teilnetz zu sendenden Datenrahmen, die Datagramme einkapseln, Ingress Port-basiert die Kennung des zweiten virtuellen lokalen Netzes zuordnen/zuordnet.

12. Switch zur Durchführung eines Verfahrens nach einem der Ansprüche 1 bis 11 mit
- mehreren Ports zur Verbindung mit Datagramme weiterleitenden Kommunikationsgeräten und/oder Kommunikationsendgeräten,
- wobei der Switch (301, 302) dafür ausgestaltet und eingerichtet ist, Datagramme (400) von einem ersten Kommunikationsgerät (201) in einem ersten Teilnetz (101) und zu einem zweiten Kommunikationsgerät (202) in einem zweiten Teilnetz (102) über ein drittes Teilnetz (103) zu senden, wobei in durch das erste Kommunikationsgerät gesendete Datagramme eine Kennung (402) eines ersten virtuellen lokalen Netzes sowie eine Prioritätsangabe (403) eingefügt ist,
- wobei der Switch dafür ausgestaltet und eingerichtet ist, die durch das erste Kommunikationsgerät gesendeten Datagramme jeweils in Datenrahmen (500), die einem Datenstrom durch das dritte Teilnetz zugeordnet sind, einzukapseln und in die Datenrahmen eine Kennung (502) eines zweiten virtuellen lokalen Netzes einzufügen,
- wobei der Switch dafür ausgestaltet und eingerichtet ist, die Datagramme, die in die dem Datenstrom zugeordneten Datenrahmen eingekapselt sind, aus empfangenen Datenrahmen zu entnehmen und die entnommenen Datagramme anhand der Kennung des ersten virtuellen lokalen Netzes und der Prioritätsangabe zum zweiten Kommunikationsgerät weiterzuleiten.
